# EUROPÄISCHE PATENTSCHRIFT

(11) **EP 1 571 396 B1**
(45) Veröffentlichungstag und Bekanntmachung des Hinweises auf die Patenterteilung: **28.06.2017**
(21) Anmeldenummer: 05101157.5
(22) Anmeldetag: 16.02.2005
(51) Int. Cl.: F23R 3/28, F02C 7/28, F16J 15/08, F23R 3/60

(54) **Dichtungskörper bei einer Brennkamer einer Gasturbine**
Sealing body for gas turbine combustor
Dispositif d'étanchéité pour une chambre de combustion de turbine à gaz

(30) Priorität: 01.03.2004 DE 102004010422
(43) Veröffentlichungstag der Anmeldung: 07.09.2005
(73) Patentinhaber: Ansaldo Energia Switzerland AG, 5401 Baden (CH)
(72) Erfinder: Boston, Ian, William, 5408, Ennetbaden (CH); Cornett, Kenneth W., 06442, Ivoryton (US); Hocke, Hans-Martin, TS21 2JE, Sedgefield, Stockton on Tees (GB); Hurter, Jonas, 5400, Baden (CH); More, Dominick, Greg, 06457, Middletown (US)
(74) Vertreter: Bernotti, Andrea

(56) Entgegenhaltungen:
- EP-A1- 1 403 584
- US-A- 4 712 370

## Beschreibung

### Technisches Gebiet

Die vorliegende Erfindung betrifft einen Dichtungskörper zum Abdichten eines äußeren Bauteils gegenüber einem inneren Bauteil, insbesondere bei einer Brennkammer einer Gasturbine.

### Stand der Technik

Bei einer Gasturbine besitzt eine Brennkammer, insbesondere eine Ringbrennkammer oder eine Silobrennkammer, wenigstens einen Brenner, insbesondere einen Vormischbrenner. Bei besonderen Ausführungsformen der Brennkammer kann ein derartiger Brenner mit einer Lanze ausgestattet sein, die sich durch eine in einem Kopf des Brenners ausgebildete Durchgangsöffnung hindurch erstreckt und in den Brenner hineinragt. Eine derartige Lanze dient zum Eindüsen von Brennstoff in den Brenner bzw. in die Brennkammer.

Im Bereich der genannten Durchgangsöffnung muss die Lanze gegenüber dem Brenner abgedichtet sein, um ein Eindringen der heißen Verbrennungsabgase in einen Raum stromauf des Brenners zu vermeiden. Eine derartige Abdichtung muss dabei hinreichend elastisch sein, um die im Betrieb der Brennkammer auftretenden Relativbewegungen zwischen Lanze und Brenner aufnehmen zu können. Zum einen handelt es sich hierbei um Vibrationen, die während des Betriebs der Brennkammer auftreten, zum anderen kommt es beim Hochfahren und beim Abschalten der Brennkammer bzw. der Gasturbine zu extremen thermischen Ausdehnungs- bzw. Schrumpfungseffekten. Schließlich muss die Abdichtung den im Betrieb auftretenden hohen Temperaturen standhalten.

Aus dem Stand der Technik sind Dichtungskörper und Dichtungsanordnungen bekanntgeworden, bei denen der Dichtungskörper sich entlang eines Umfangs erstreckt und ausgebildet und bereitgestellt ist, um zwischen einem inneren und äusseren Bauteil angeordnet zu werden. Der Dichtungskörper umfasst eine äussere Dichtzone, welche ausgebiildet und bereitgestellt ist, an einer Innendichtfläche eines äusseren Bauteils anzuliegen sowie eine innere Dichtzone, welche ausgebildet und bereitgestellt ist, an einer Aussendichtfläche eines inneren Bauteils anzuliegen. Derartige Dichtungskörper und Dichtungsanordnungen sind in der US 3,759,038, der US 5,987,879, sowie in der EP1 403 584 gezeigt, wobei letzteres Dokument nachveröffentlicht ist und Stand der Technik im Sinne des Art. 54(3) EPÜ darstellt. Hierbei ist der Dichtungskörper jeweils von der äusseren Dichtzone her geschlitzt, um eine gewisse Flexibilität zu schaffen und thermische Dehnungen und dergleichen zu kompensieren. Damit allerdings ist die äussere Dichtzone entlang der Umfangs unterbrochen, und die Flexibilität wird im Zweifelfalle mit einer schlechteren Dichtwirkung bzw. erhöhten Leckagen erkauft.

### Darstellung der Erfindung

Hier setzt die Erfindung an. Die Erfindung, wie sie in den Ansprüchen gekennzeichnet ist, beschäftigt sich mit dem Problem, für die Abdichtung eines äußeren Bauteils gegenüber einem inneren Bauteil einen besonders effektiven Weg aufzuzeigen, der insbesondere bei hohen Temperaturen, großen thermischen Ausdehnungseffekten und Vibrationen eine hinreichende Funktionsfähigkeit aufweist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, im Bereich der Durchgangsöffnung einen Dichtungskörper anzuordnen, der das innere Bauteil umfangsmäßig geschlossen umfasst und mit einer inneren Dichtzone an einer Außendichtfläche des inneren Bauteils umfangsmäßig geschlossen anliegt und mit einer äußeren Dichtzone an einer Innendichtfläche des äußeren Bauteils umfangsmäßig geschlossen anliegt. Dabei ist der Dichtungskörper zumindest aus einem in Umfangsrichtung geschlossenen, bandförmigen Metallblech durch Umformung hergestellt. Diese Umformung wird so durchgeführt, dass der Dichtkörper ein die Dichtzonen aufweisendes Profil erhält. Durch die Verwendung eines Metallblechs zur Herstellung des Dichtkörpers ist dieser hochtemperaturfest und kann z. B. den im Betrieb eines Brenners auftretenden Temperaturen standhalten. Da das Metallblech, aus dem der Dichtungskörper geformt ist, in Umfangsrichtung geschlossen ist, kann der Dichtkörper auch relativ großen Belastungen und Spannungen ausgesetzt werden, ohne dabei zu versagen. Durch die Verwendung eines bandförmigen Metallblechs zur Herstellung des Dichtungskörpers können die innere Dichtzone und die äußere Dichtzone im Profil voneinander beabstandet ausgebildet werden, wodurch am Dichtungskörper zwischen seinen Dichtzonen eine Biegeelastizität realisierbar ist, die es ermöglicht, im Einbauzustand die Dichtzonen unter Vorspannung an den zugehörigen Dichtflächen zur Anlage zu bringen. Des Weiteren gewährleistet die Biegeelastizität eine ordnungsgemäße Funktion des Dichtungskörpers bei Vibrationen und Relativbewegungen der gegeneinander abzudichtenden Bauteile, da die Dichtungszonen des Dichtungskörpers Relativlageänderungen der Dichtflächen aufgrund der Elastizität des Dichtungskörpers folgen können. Erfindungsgemäss ist eine Ausführungsform, bei welcher der Dichtungskörper aus zwei in Umfangsrichtung geschlossenen, bandförmigen und deckungsgleichen Metallteilen durch Umformung hergestellt ist, wobei diese Metallbleche ineinander angeordnet sind und dicht aneinander anliegen, wobei dann die innere Dichtzone am Innenblech und die äußere Dichtzone am Außenblech ausgebildet ist. Durch diese Materialverdopplung lassen sich die Biegesteifigkeit und somit die erzielbaren Vorspannungen erheblich steigern, wobei gleichzeitig die Herstellbarkeit des Dichtungskörpers durch Umformung weiterhin gewährleistet bleibt. Da die hierzu verwendeten Metallbleche deckungsgleich sind und nach dem Umformvorgang quasi dasselbe Profil aufweisen, sind die beiden Metallbleche im Dichtungskörper durch Formschluss ineinander gefügt und dadurch fest miteinander verbunden. Der Umformvorgang kann dabei ohne weiteres so ausgeführt werden, dass die beiden Metallbleche anschließend mit hoher Pressung aneinander anliegen, um so die erwünschte Abdichtung zwischen den einzelnen Metallblechen zu erzielen. Grundsätzlich ist es jedoch möglich, die beiden Metallbleche zusätzlich miteinander zu verlöten und/oder zu verschweißen. Erfindungswesentlich hierbei ist, Innenblech und Außenblech hinsichtlich Werkstoff und/oder Wandstärke voneinander unterschiedlich auszugestalten. Hierdurch wird die Möglichkeit geschaffen, Innenblech und Außenblech hinsichtlich unterschiedlicher Funktionen und Anforderungen zu adaptieren. Beispielsweise kann das Innenblech im Hinblick auf erforderliche mechanische Eigenschaften des Dichtungskörper ausgelegt werden, wie z.B. Festigkeit, Elastizität und Formstabilität, während im Unterschied dazu das Außenblech im Hinblick auf eine erhöhte thermische und chemische Beanspruchung des Dichtungskörpers ausgelegt werden kann, wodurch das Außenblech quasi als Schutzschicht arbeitet.

Gemäß einer speziellen Weiterbildung kann der Dichtkörper zumindest einen gekrümmten Umfangsabschnitt aufweisen, in dem das Innenblech und/oder das Außenblech mehrere quer zur Umfangsrichtung verlaufende, das jeweilige Blech durchdringende Schlitze aufweist bzw. aufweisen. Die Ausbildung von Schlitzen in den gekrümmten Umfangsabschnitten vereinfacht die Herstellung der gekrümmten Umfangsabschnitte durch Umformung. Des Weiteren erhält der Dichtungskörper durch die Schlitze in den gekrümmten Umfangsabschnitten eine erhöhte Elastizität, was eine federelastische Nachgiebigkeit des Dichtungskörpers in diesen Umfangsbereichen verbessert.

Wenn sowohl Innenblech als auch Außenblech mit den Schlitzen versehen sind, können bei einer Weiterbildung die Schlitze des Innenblechs gegenüber den Schlitzen des Außenblechs in Umfangsrichtung versetzt angeordnet sein, so dass die Bleche zwischen in Umfangsrichtung benachbarten Schlitzen dicht aneinander anliegen. Bei einer derartigen Ausführungsform besitzt sowohl das Innenblech als auch das Außenblech im jeweils gekrümmten Umfangsabschnitt die verbesserte Herstellbarkeit und Biegeelastizität, wobei durch die spezielle versetzte Anordnung der inneren und äußeren Schlitze weiterhin die dichte Anlage zwischen Innenblech und Außenblech gewährleistet ist.

Gemäß einer anderen vorteilhaften Ausführungsform kann das Profil einen nach innen federelastisch nachgiebigen Federabschnitt nachweisen, der die äußere Dichtzone im Einbauzustand gegen die Innendichtfläche anpresst. Durch die Ausstattung des Profils mit einem speziellen Federabschnitt können eine gewünschte Federelastizität und Nachgiebigkeit eingestellt werden, um vorbestimmte Relativlagenänderungen zwischen den Dichtzonen des Dichtungskörpers reversibel zu ermöglichen. Die Dichtungswirkung des Dichtungskörpers kann somit auch in einem relativ großen Bereich von Relativbewegungen zwischen den Bauteilen bzw. zwischen deren Dichtungsflächen gewährleistet werden.

Weitere wichtige Merkmale und Vorteile des erfindungsgemäßen Dichtungskörpers ergeben sich aus den Unteransprüchen, aus den Zeichnungen und aus der zugehörigen Figurenbeschreibung anhand der Zeichnungen.

### Kurze Beschreibung der Zeichnungen

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen. Es zeigen, jeweils schematisch,
- Fig. 1: einen Längsschnitt durch einen Bereich zwischen zwei Bauteilen, die mit Hilfe des erfindungsgemäßen Dichtungskörpers gegeneinander abgedichtet sind,
- Fig. 2: eine perspektivische Ansicht auf einen Ausschnitt der Fig. 1,
- Fig. 3: eine vergrößere Detailansicht eines Details III in Fig. 1,
- Fig. 4: eine perspektivische Ansicht des Dichkörpers,
- Fig. 5: eine Seitenansicht des Dichtkörpers,
- Fig. 6: eine Frontansicht des Dichtkörpers,
- Fig. 7: eine Draufsicht des Dichtkörpers,
- Fig. 8: eine vergrößerte Draufsicht gemäß einem Detail VIII in Fig. 7,
- Fig. 9: einen Längsschnitt durch ein Profil des Dichtkörpers entsprechend Schnittlinien IX in Fig. 7.

### Wege zur Ausführung der Erfindung

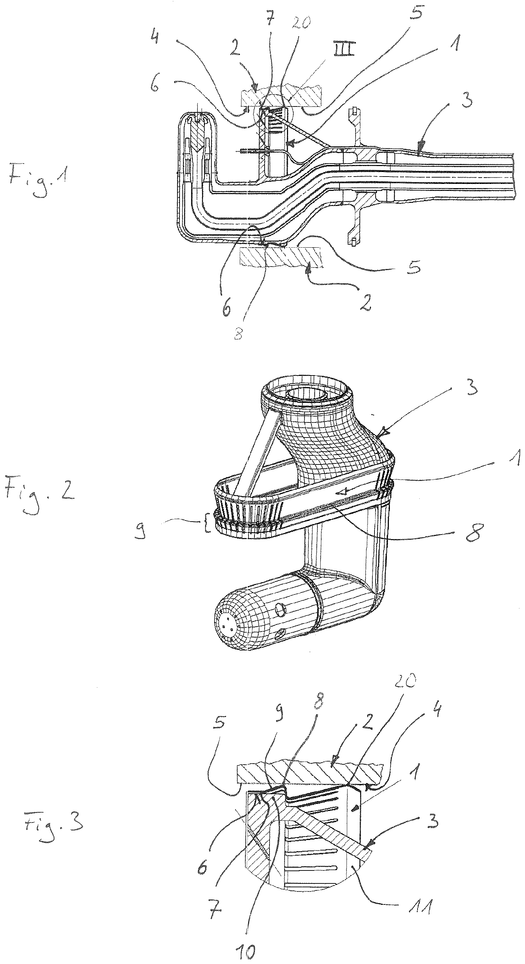

Entsprechend Fig. 1 dient ein erfindungsgemäßer Dichtungskörper 1 zum Abdichten eines äußeren Bauteils 2 gegenüber einem inneren Bauteil 3, wobei das innere Bauteil 3 das äußere Bauteil 2 in einer Durchgangsöffnung 4 durchsetzt. Bei einer bevorzugten Anwendungsform des erfindungsgemäßen Dichtkörpers 1 handelt es sich beim äußeren Körper 2 um einen hier nur teilweise dargestellten Brenner einer im übrigen nicht dargestellten Brennkammer einer Gasturbine. Beim inneren Bauteil 3 handelt es sich bei der bevorzugten Anwendungsform um eine Lanze, die durch die Durchgangsöffnung 4 hindurch bzw. aus dem die Durchgangsöffnung 4 aufweisenden Abschnitt des Brenners bzw. des äußeren Bauteils 2 herausragt. Die Lanze, also das innere Bauteil 3, dient im Betrieb der Brennkammer zum Eindüsen oder Einspritzen von Brennstoff in den Brenner bzw. in die Brennkammer. Die Durchgangsöffnung 4 ist dabei an einem Kopf des jeweiligen Brenners ausgebildet, von dem aus die Lanze in den Brenner hineinragt.

Das äußere Bauteil 2 besitzt im Bereich der Durchgangsöffnung 4 eine Innendichtfläche 5, die dem inneren Bauteil 3 zugewandt ist. Im Unterschied dazu ist das innere Bauteil 3 im Bereich der Durchgangsöffnung 4 mit einer Außendichtfläche 6 ausgestattet, die dem äußeren Bauteil 2 zugewandt ist, vergleiche hierzu auch Fig. 3. Der Dichtungskörper 1 ist nun so ausgestaltet, dass er eine innere Dichtzone 7 und eine äußere Dichtzone 8 aufweist. In dem in Fig. 1 gezeigten Einbauzustand ist der Dichtungskörper 1 im Bereich der Durchgangsöffnung 4 angeordnet, und zwar so, dass er das innere Bauteil 3 umfangsmäßig geschlossen umfasst. Des Weiteren liegt die innere Dichtzone 7 an der Außendichtfläche 6 umfangsmäßig geschlossen an. Gleichzeitig liegt die äußere Dichtzone 8 umfangsmäßig geschlossen an der Innendichtfläche 5 an. Des Weiteren ist am Dichtungskörper 1 eine Haltezone 9 ausgebildet, die mit einem am inneren Bauteil 3 ausgebildeten komplementären Haltebereich 10 zusammenwirkt und dadurch den Dichtungskörpers 1 am inneren Bauteil 3 fixiert, vergleiche hierzu Fig. 3. Sowohl die innere Dichtzone 7 als auch die äußere Dichtzone 8 sind in der Haltezone 9 ausgebildet.

Der Dichtungskörper 1 ist zweckmäßig selbsthaltend am inneren Bauteil 3 fixierbar. Gemäß Fig. 3 kann der Dichtungskörper 1 so am inneren Bauteil 3 vormontiert werden. Das innere Bauteil 3 kann dann zusammen mit dem daran befestigten Dichtungskörper 1 am äußeren Bauteil 2 montiert, insbesondere in die Durchgangsöffnung 4 eingesteckt, werden.

Der Dichtungskörper 1 besitzt eine Umfangskontur, die komplementär zu einer Innenkontur der Durchgangsöffnung 4 geformt ist. Wie aus den Fig. 2 und 4 bis 7 besonders deutlich hervorgeht, kann die Umfangskontur des Dichtungskörpers 1 langkreisförmig sein bzw. eine gestreckte Kreisform besitzen, also eine Form, die aus zwei voneinander beabstandeten und durch zwei parallele Verbindungsabschnitte miteinander verbundenen Halbkreisen besteht. Eine derartige Umfangskontur des Dichtungskörpers 1 bzw. die dazu komplementäre Innenkontur der Durchgangsöffnung 4 können z. B. durch die hier gezeigte, abgewinkelte Form der Lanze (inneres Bauteil 3) bedingt sein, um ein Durchstecken des freien Lanzenendes durch die Durchgangsöffnung 4 zu ermöglichen. Bei anderen Ausführungsformen, insbesondere bei anderen Lanzen, können auch elliptische oder kreisförmige Konturen für die Durchgangsöffnung 4 und somit für den Umfang des Dichtungskörpers 1 vorgesehen sein.

Der Dichtungskörper 1 ist erfindungsgemäß aus zumindest einem Metallblech 11 durch Umformung hergestellt, das bandförmig und in Umfangsrichtung geschlossen ist. Beispielsweise wird der Dichtungskörper 1 aus einem zylindrischen hülsenförmigen Blechkörper hergestellt, der in Umfangsrichtung geschlossen ist. Die Umformung erfolgt zweckmäßig mittels eines entsprechenden Walzverfahrens. Aufgrund der erwünschten Elastizitäts- und Festigkeitseigenschaften scheiden Gießverfahren aus. Ebenso wenig kann der Dichtungskörper 1 aufgrund der gewünschten Profilierung tiefgezogen werden. Im Unterschied dazu kann der Dichtungskörper 1 alternativ zum Walzumformen auch mittels Innenhochdruckumformung oder Hydroumformung hergestellt werden.

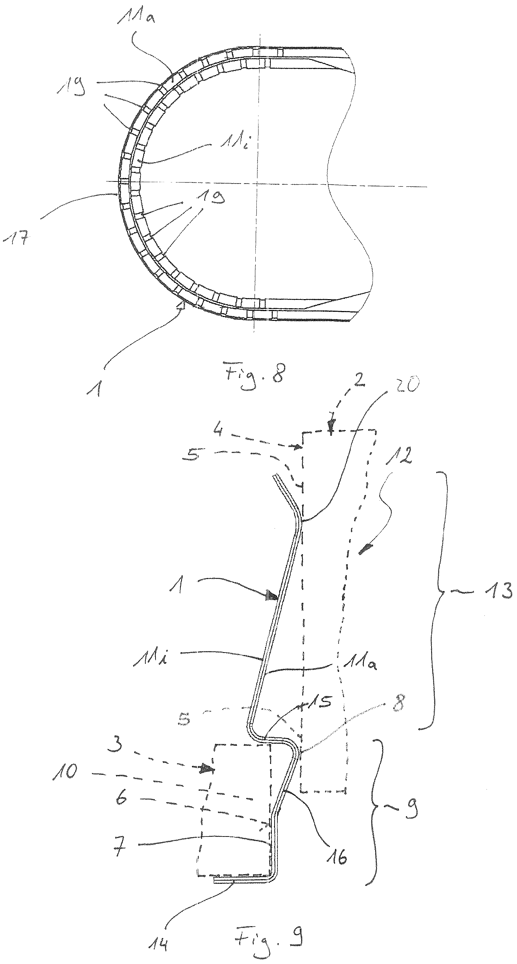

Entsprechend Fig. 9 erhält der Dichtungskörper 1 durch den jeweiligen Umformvorgang ein Profil 12. Dieses Profil 12 ist dabei so geformt, dass es entlang des gesamten Umfangs des Dichtkörpers 1 die innere Dichtzone 7 und beabstandet davon die äußere Dichtzone 8 aufweist bzw. ausbildet. Des Weiteren ist am Profil 12 zumindest in einem Umfangsabschnitt des Dichtkörpers 1 die Haltezone 9 ausgebildet, die in Fig. 9 durch eine geschweifte Klammer gekennzeichnet ist. Die äußere Dichtzone 8 ist im Profil 12 durch eine nach außen, also zur Innendichtfläche 5 des äußeren Bauteils 2 hin konvexe Krümmung ausgebildet. Durch diese Ausgestaltung liegt die äußere Dichtzone 8 im Einbauzustand linienförmig an der Innendichtfläche 5 an. Durch eine entsprechende Formgebung der Innendichtfläche 5 können dabei Relativbewegungen in der Einsteckrichtung zwischen den Bauteilen 2 und 3 zugelassen werden, denen die äußere Dichtzone 8 ohne weiteres folgen kann und im gesamten Verstellbereich eine hinreichende Dichtungswirkung gewährleistet. Beispielsweise ist das äußere Bauteil 2 mit einer zylindrischen, insbesondere kreiszylindrischen, Innendichtfläche 5 versehen.

Das Profil 12 ist bei der hier gezeigten, bevorzugten Ausführungsform mit einem Federabschnitt 13 ausgestattet, der in Fig. 9 durch eine geschweifte Klammer gekennzeichnet ist. Dieser Federabschnitt 13 ist zumindest nach innen federelastisch nachgiebig und weist entfernt von der inneren Dichtzone 7 eine Stützzone 20 auf. Durch diese Bauweise und bei einer entsprechenden Dimensionierung des Dichtungskörpers 1 kann erreicht werden, dass die äußere Dichtzone 8 im Einbauzustand zumindest in einer Ausgangslage unter einer Vorspannung an der Innendichtfläche 5 anliegt, also gegen die Innendichtfläche 5 angepresst ist. Hierbei stützt sich der Federabschnitt 13 über die Stützzone 20 zweckmäßig ebenfalls an der Innendichtfläche 5 ab. Die Federelastizität des Federabschnitts 13 sowie die Vorspannung, mit welcher die äußere Dichtzone 8 an der Innendichtfläche 5 anliegt, gewährleisten bei Relativbewegungen zwischen den Bauteilen 2, 3 senkrecht zur Innendichtfläche 5 ein elastisches Folgen und Ausweichen der äußeren Dichtzone 8, ohne dabei den Kontakt zur Innendichtfläche 5 zu verlieren. In der Folge kann das dichte Anliegen der äußeren Dichtzone 8 an der Innendichtfläche 5 bei den genannten Relativbewegungen gewährleistet werden.

Im Unterschied dazu ist bei der hier gezeigten Ausführungsform die innere Dichtzone 7 im Profil 12 geradlinig ausgestaltet, wodurch sich im Einbauzustand eine flächige Anlage an der Außendichtfläche 6 ergibt. Eine derartige flächige Anlage ermöglicht eine besonders hohe Dichtwirkung.

Wie aus dem Schnitt in Fig. 9 hervorgeht, kann die Haltezone 9 im Profil als C-förmige Klammer ausgebildet sein. Diese Klammer (Haltezone 9) besitzt zwei nach innen abgewinkelte Halteabschnitte 14, 15, die sich gegenüberliegen und die im Einbauzustand den Haltebereich 10 des inneren Bauteils 3 an zwei sich gegenüberliegenden Seiten umgreifen. Zu diesem Zweck ist der Haltebereich 10 als nach außen abstehender Haltekragen ausgebildet. Vorzugsweise ist die Haltezone 9 zwischen den beiden Halteabschnitten 14, 15 so geformt, dass sich eine Feder 16 ausbildet. Diese Feder 16 kann zum einen die beiden Halteabschnitte 14, 15 aufeinander zu vorspannen bzw. im Einbauzustand gegen den Haltekragen (Haltebereich 10) anpressen. Hierdurch ergibt sich eine spielfreie Fixierung des Dichtungskörpers 1 am zweiten Bauteil 3. Gleichzeitig können dadurch Fertigungstoleranzen in der Einsteckrichtung ausgeglichen werden. Zum anderen ermöglicht die Feder 16 außerdem eine vorgespannte Anlage der inneren Dichtzone 7 an der Außendichtfläche 6 bei einer entsprechenden Anpassung der Dimensionierung des Dichtungskörpers 1 an die Dimension der Außendichtfläche 6. Gleichzeitig wird auch hierdurch ein Ausgleich von quer zur Einsteckrichtung auftretenden Toleranzen ermöglicht.

Die Dimensionierung des Federabschnitts 13 kann beispielsweise so erfolgen, dass ein Abstand zwischen der Stützzone 20 und den Dichtzonen 7 und 8 zwischen einem Krümmungsradius der halbkreisförmig gekrümmten Umfangsabschnitte 17 und einem Abstand der beiden geradlinigen Umfangsabschnitte 18 liegt.

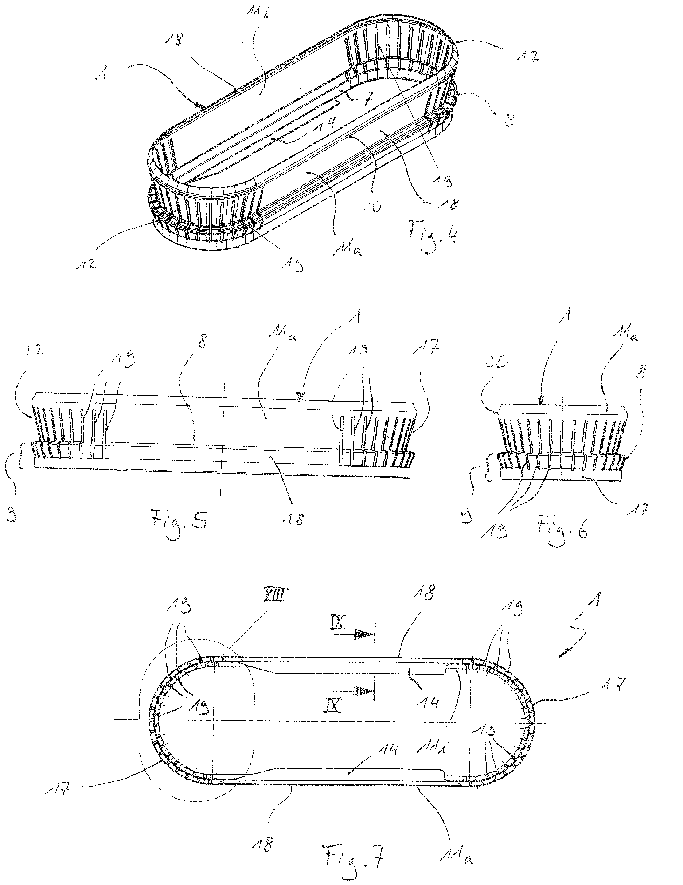

Zweckmäßig ist einer der Halteabschnitte 14, 15, hier der mit 14 bezeichnete Halteabschnitt, an einem freien Ende des Profils 12 ausgebildet und nach innen abgewinkelt. Wie insbesondere aus Fig. 7 hervorgeht, besitzt die Umfangskontur des Dichtungskörpers 1 zwei halbkreisförmig gekrümmte Umfangsabschnitte 17 und zwei geradlinige Umfangsabschnitte 18, die parallel zueinander verlaufen und die beiden halbkreisförmigen gekrümmten Umfangsabschnitte 17 miteinander verbinden. Bei der hier gezeigten Ausführungsform ist der am freien Ende des Profils 12 ausgebildete Halteabschnitt 14 ausschließlich an den beiden geradlinigen Umfangsabschnitten 18 ausgebildet, mit der Folge, dass auch die Haltezone 9 bzw. die Klammer nur im Bereich dieser geradlinigen Umfangsabschnitte 18 am Profil 12 ausgebildet ist. Dies hat insbesondere herstellungstechnische Hintergründe, da ein nach innen abgewinkelter Halteabschnitt 14 an den gekrümmten Umfangsabschnitten 17 nicht oder nur sehr schwer herstellbar ist.

Es ist klar, dass der Halteabschnitt 9 grundsätzlich auch so ausgestaltet sein kann, dass der Dichtungskörper 1 damit selbsthaltend am äußeren Bauteil 2 fixierbar ist.

Je nach Anwendungsfall kann der Dichtungskörper 1 im Betrieb sehr hohen Kräften und/oder Momenten ausgeliefert sein. Um diese Belastungen elastisch auffangen zu können, benötigt der Dichtungskörper 1 eine relativ große Federsteifigkeit. Die durch Umformung erzielbaren Krümmungsradien hängen jedoch von der Materialstärke des verwendeten Metallblechs 11 ab. Die Dicke des Metallblechs 11 begrenzt nach unten die erreichbaren Krümmungsradien. Um nun für relativ kleine Krümmungsradien eine größere Federsteifigkeit zu erreichen, wird für eine Ausführungsform des erfindungsgemäßen Dichtungskörpers 1 vorgeschlagen, diesen aus zwei Metallblechen 11i und 11a durch Umformung herzustellen, wobei diese beiden Metallbleche 11i, 11a deckungsgleich angeordnet sind und jeweils in Umfangsrichtung geschlossen und bandförmig sind. Des Weiteren sind diese Metallbleche 11i, 11a ineinander angeordnet und liegen dicht aneinander an. In der Folge ist die innere Dichtzone 7 am innen liegenden Metallblech oder Innenblech 11i und die äußere Dichtzone 8 am außen liegenden Metallblech oderAußenblech 11a ausgebildet. Mit Hilfe der beiden Metallbleche 11 i, 11a ergibt sich für den Dichtkörper 1 eine zweischichtige Verbundbauweise. Die beiden Metallbleche 11i, 11a sind bei der Umformung zur Herstellung des Dichtkörpers 1 relativ zueinander beweglich, was die Erzielung kleinerer Krümmungsradien begünstigt. Gleichzeitig bilden sie Materialdopplungen, welche eine gegenseitige Aussteifung und somit eine erhöhte Federsteifigkeit bewirken.

Wie insbesondere aus Fig. 9 entnehmbar ist, erstrecken sich die beiden Bleche 11i und 11a über die gesamte Länge des Profils 12 deckungsgleich. Aufgrund der gewählten Profilierung ergibt sich dadurch ein intensiver Formschluss zwischen den beiden Blechen 11i, 11a, wodurch die beiden Bleche 11i, 11a fest miteinander verbunden sind, ohne dass zusätzliche Befestigungsmaßnahmen erforderlich sind. Dennoch sind zusätzliche Befestigungsmaßnahmen, wie z. B. Verlöten und/oder Verschweißen, nicht ausgeschlossen.

Die Ausbildung gekrümmter Umfangsabschnitte 17 am Dichtungskörper 1 ist zum einen zwangsläufig, da der Dichtungskörper 1 das innen liegende Bauteil 3 umfangsmäßig vollständig umschließen muss. Zum anderen reduziert die Krümmung in Verbindung mit der gewählten Profilierung die Federelastizität des Profils 12 in diesen gekrümmten Umfangsabschnitten 17. Da der Dichtungskörper 1 jedoch auch in seinen gekrümmten Umfangsabschnitten 17 federelastisch auf Relativbewegungen zwischen Bauteilen 2, 3 antworten und seine Dichtungswirkung beibehalten soll, ist es erwünscht, die Federelastizität im Bereich der gekrümmten Umfangsabschnitte 17 zu erhöhen. Erreicht wird dies beim erfindungsgemäßen Dichtungskörper 1 mit Hilfe von Schlitzen 19, die im jeweiligen gekrümmten Umfangsabschnitt 17 ausgebildet sind, quer zur Umfangsrichtung verlaufen und das jeweilige Blech 11i, 11a durchdringen. Diese Schlitze 19 erstrecken sich dabei bis unmittelbar an bzw. vor die Dichtzonen 7 und 8 des Dichtungskörpers 1. Die Schlitze 19 werden bei der Herstellung des Dichtungskörpers 1 vor der Umformung des jeweiligen Metallblechs 11 angebracht.

Bei der hier gezeigten, bevorzugten Ausführungsform sind sowohl das Innenblech 11i als auch das Außenblech 11a mit den Schlitzen 19 ausgestattet. Bei anderen Ausführungsformen können auch nur das Innenblech 11i oder nur das Außenblech 11a mit den Schlitzen 19 ausgestattet sein. Durch die Schlitze 19 in den gekrümmten Umfangsabschnitten 17 wird das jeweilige Metallblech 11 quasi segmentiert, wodurch die Federelastizität des Dichtungskörpers 1 in diesem gekrümmten Umfangsabschnitt 17 deutlich erhöht wird. Das heißt, in gekrümmten Umfangsabschnitten 17 kann der Dichtungskörper 1 bei deutlich größeren Verformungswegen federelastisch nachgeben.

Bei der hier gezeigten Ausführungsform sind sowohl das Innenblech 11i als auch das Außenblech 11a in den gekrümmten Umfangsabschnitten 17 mit den Schlitzen 19 versehen. Wie insbesondere aus Fig. 9 hervorgeht, sind die Schlitze 19 an den Blechen 11i, 11a so positioniert bzw. sind Innenblech 11i und Außenblech 11a relativ zueinander so positioniert, dass die Schlitze 19 des Innenblechs 11i gegenüber den Schlitzen 19 des Außenblechs 11a in Umfangsrichtung zueinander versetzt angeordnet sind. Beispielsweise sind die Schlitze 19 des Innenblechs 11i jeweils mittig zwischen zwei Schlitzen 19 des Außenblechs 11a angeordnet. Jedenfalls ist jeder Schlitz 19 des Außenblechs 11a durch ein zwischen benachbarten Schlitzen 19 des Innenblechs 9i liegendes Wandsegment abgedeckt. In entsprechender Weise ist auch jeder Schlitz 19 des Innenblechs 11i durch ein zwischen benachbarten Schlitzen 19 des Außenblechs 11a liegendes Wandsegment abgedeckt. Hierdurch ergibt sich eine Konfiguration, bei der die Bleche 11i, 11a zwischen in Umfangsrichtung benachbarten Schlitzen 19 dicht aneinander anliegen.

Wichtig ist hierbei, dass die Schlitze 19 ausschließlich in den gekrümmten Umfangsabschnitten 17 ausgebildet sind und nicht in den geradlinigen Umfangsabschnitten 18.

Das jeweils zur Herstellung des Dichtungskörpers 1 verwendete Metallblech 11, insbesondere das Innenblech 11i und das Außenblech 11a, ist vorzugsweise einstückig aus einem Teil hergestellt. Hierdurch erhält der Dichtungskörper 1 eine besonders hohe Festigkeit.

Bevorzugt ist eine Ausführungsform, bei welcher das Innenblech 11i und das Außenblech 11a hinsichtlich unterschiedlicher Funktionen adaptiert sind. Beispielsweise dient das Innenblech 11i dazu, dem Dichtungskörper 1 die erforderliche mechanische Stabilität, Festigkeit, Steifigkeit bzw. Elastizität zu geben. Im Unterschied dazu kann das Außenblech 11a quasi als Schutzschicht dienen und hierzu eine erhöhte thermische und/oder chemische Resistenz aufweisen. Die Adaption des Innenblechs 11i und des Außenblechs 11a an unterschiedliche Funktionen erfolgt insbesondere durch die Verwendung unterschiedlicher Werkstoffe und/oder unterschiedliche Wandstärken für das Innenblech 11i einerseits und das Außenblech 11a andererseits. Folglich kann das Innenblech 11i hinsichtlich Festigkeits- und Elastizitätsanforderungen optimiert sein, während das Außenblech 11a hinsichtlich Verschleiß- und Oxidationsanforderungen optimiert sein kann.

### Bezugszeichenliste

- 1: Dichtungskörper
- 2: äußeres Bauteil
- 3: inneres Bauteil
- 4: Durchgangsöffnung
- 5: Innendichtfläche
- 6: Außendichtfläche
- 7: innere Dichtzone
- 8: äußere Dichtzone
- 9: Haltezone
- 10: Haltebereich
- 11: Metallblech
- 11i: Innenblech
- 11a: Außenblech
- 12: Profil
- 13: Federabschnitt
- 14: Halteabschnitt
- 15: Halteabschnitt
- 16: Feder
- 17: gekrümmter Umfangsabschnitt
- 18: geradliniger Umfangsabschnitt
- 19: Schlitz
- 20: Stützzone

## Patentansprüche

1. Dichtungskörper zum Abdichten eines äußeren Bauteils (2) gegenüber einem inneren Bauteil (3), insbesondere bei einer Brennkammer einer Gasturbine, wobei der Dichtungskörper (1) eine innere Dichtzone (7) aufweist, mit der er im Einbauzustand an einer Außendichtfläche (6) des inneren Bauteils (3) umfangsmäßig geschlossen anliegt und eine äußere Dichtzone (8) aufweist, mit der er im Einbauzustand an einer Innendichtfläche (5) des äußeren Bauteils (2) umfangsmäßig geschlossen anliegt, wobei der Dichtungskörper (1) zwei in Umfangsrichtung geschlossenen, bandförmigen und deckungsgleichen Metallblechen (11 i, 11a) umfasst und durch Umformung hergestellt ist, wobei an einem Profil (12) des Dichtungskörpers (1) entlang des gesamten Umfangs die innere Dichtzone (7) und die äußere Dichtzone (8) ausgebildet sind und wobei die Metallbleche (11 i, 11a) ineinander angeordnet sind und dicht aneinander anliegen, wobei die innere Dichtzone (7) am Innenblech (11 i) und die äußere Dichtzone (8) am Außenblech (11a) ausgebildet ist; **dadurch gekennzeichnet, dass** sich Innenblech (11i) und Außenblech (11a) hinsichtlich Werkstoff und/oder Wandstärke voneinander unterscheiden.

2. Dichtungskörper nach Anspruch 1, **dadurch gekennzeichnet, dass** der Dichtungskörper (1) zumindest einen gekrümmten Umfangsabschnitt (17) aufweist, in dem das Innenblech (11i) und/oder das Außenblech (11a) mehrere quer zur Umfangsrichtung verlaufende, das jeweilige Blech (11i, 11a) durchdringende Schlitze (19) aufweist/aufweisen.

3. Dichtungskörper nach Anspruch 2, **dadurch gekennzeichnet, dass** die Schlitze (19) des Innenblechs (11i) gegenüber den Schlitzen (19) des Außenblechs (11a) in Umfangsrichtung versetzt angeordnet sind, so dass die Bleche (11i, 11a) zwischen in Umfangsrichtung benachbarten Schlitzen (19) dicht aneinander anliegen.

4. Dichtungskörper nach einem der Ansprüche 1 bis 3, **dadurch gekennzeichnet, dass** das Profil (12) einen nach innen federelastischen nachgiebigen Federabschnitt (13) aufweist, der die äußere Dichtzone (8) im Einbauzustand gegen die Innendichtfläche (5) anpresst.

5. Dichtungskörper nach einem der Ansprüche 1 bis 4, **dadurch gekennzeichnet, dass** die äußere Dichtzone (8) im Profil (12) so gekrümmt ist, dass sie im Einbauzustand linienförmig an der Innendichtfläche (5) anliegt.

6. Dichtungskörper nach einem der Ansprüche 1 bis 5, **dadurch gekennzeichnet, dass** die innere Dichtzone (7) im Profil (12) geradlinig ist und im Einbauzustand flächig an der Außendichtfläche (6) anliegt.

7. Dichtungskörper nach einem der Ansprüche 1 bis 6, **dadurch gekennzeichnet, dass** der Dichtungskörper (1) mit einer Haltezone (9) selbsthaltend an einem Haltebereich (10) des inneren Bauteils (3) fixiert ist, wobei am Profil (12) zumindest in einem Umfangsabschnitt (18) die Haltezone (9) ausgebildet ist.

8. Dichtungskörper nach Anspruch 7, **dadurch gekennzeichnet, dass** die Haltezone (9) im Profil (12) als C-förmige Klammer ausgebildet ist, die zwei nach innen abgewinkelte, sich gegenüberliegende Halteabschnitte (14, 15) aufweist, die im Einbauzustand den als nach außen abstehenden Haltekragen ausgebildeten Haltebereich (10) umgreifen.

9. Dichtungskörper nach Anspruch 8, **dadurch gekennzeichnet, dass** die Haltezone (9) zwischen den Halteabschnitten (14, 15) als Feder (16) geformt ist, welche die Halteabschnitte (14, 15) im Einbauzustand aufeinander zu und gegen den Haltebereich (10) anpresst.

10. Dichtungskörper nach einem der Ansprüche 7 bis 9, **dadurch gekennzeichnet, dass** die Haltezone (9) in einem geradlinigen Umfangsabschnitt (18) des Dichtungskörpers (1) ausgebildet ist.

11. Dichtungskörper nach einem der Ansprüche 1 bis 10, **dadurch gekennzeichnet, dass** der Dichtungskörper (1) eine kreisförmige oder eine elliptische oder eine langkreisförmige Umfangskontur aufweist.

12. Dichtungskörper nach einem der Ansprüche 1 bis 11, **dadurch gekennzeichnet, dass** der Dichtungskörper (1) durch Walzumformung aus dem wenigstens einen Metallblech (11) hergestellt ist.

13. Dichtungsanordnung, umfassend einen Dichtungskörper nach einem der Ansprüche 1 bis 12, **dadurch gekennzeichnet, dass** das äußere Bauteil (2) ein Brenner einer Brennkammer einer Gasturbine ist, wobei der Dichtungskörper (1) im Einbauzustand im Bereich einer Durchgangsöffnung (4) des äußeren Bauteils angeordnet ist und die Durchgangsöffnung (4) an einem Kopf des Brenners ausgebildet ist, dass das innere Bauteil (3) eine Lanze ist, die vom Brennerkopf her in den Brenner hineinragt und zur Brennstoffeinbringung in den Brenner und/oder in die Brennkammer dient.

## Claims

1. Sealing body for sealing an outer component (2) against an inner component (3), in particular in a combustion chamber of a gas turbine,
wherein the sealing body (1) has an inner sealing zone (7) with which, in the installation state, it lies closed peripherally on an outer sealing face (6) of the inner component (3), and an outer sealing zone (8) with which, in the installation state, it lies closed peripherally on an inner sealing face (5) of the outer component (2), wherein the sealing body (1) comprises two strip-like, congruent metal plates (11i, 11a) closed in the peripheral direction and is produced by forming,
wherein the inner sealing zone (7) and the outer sealing zone (8) are formed on a profile (12) of the sealing body (1) along its entire periphery, and
wherein the metal plates (11i, 11a) are arranged in each other and lie tightly on each other,
wherein the inner sealing zone (7) is formed on the inner plate (11i) and the outer sealing zone (8) is formed on the outer plate (11a),
**characterised in that** the inner plate (11i) and the outer plate (11a) differ from each other in material and/or wall thickness.

2. Sealing body according to claim 1, **characterised in that** the sealing body (1) has at least one curved peripheral portion (17) in which the inner plate (11i) and/or the outer plate (11a) comprise several slots (19) running transversely to the peripheral direction and penetrating the respective plate (11i, 11a).

3. Sealing body according to claim 2, **characterised in that** the slots (19) of the inner plate (11i) are arranged offset in the peripheral direction to the slots (19) of the outer plate (11a), so that the plates (11i, 11a) lie tightly against each other between slots (19) which are adjacent in the peripheral direction.

4. Sealing body according to any of claims 1 to 3, **characterised in that** the profile (12) has a spring portion (13) which is inwardly resilient in spring-elastic fashion and which, in the installation state, presses the outer sealing zone (8) against the inner sealing face (5).

5. Sealing body according to any of claims 1 to 4, **characterised in that** the outer sealing zone (8) in the profile (12) is curved such that, in the installation state, it lies linearly on the inner sealing face (12).

6. Sealing body according to any of claims 1 to 5, **characterised in that** the inner sealing zone (7) in the profile (12) is rectilinear and, in the installation state, lies flat on the outer sealing face (6).

7. Sealing body according to any of claims 1 to 6, **characterised in that** the sealing body (1) is fixed with a retaining zone (9) self-retainingly on a retaining region (12) of the inner component (3), wherein the retaining zone (9) is formed on the profile (12) at least in a peripheral portion (18).

8. Sealing body according to claim 7, **characterised in that** the retaining zone (9) in the profile (12) is formed as a C-shaped bracket which has two inwardly angled, mutually opposing retaining portions (14, 15) which, in the installation state, grip the retaining region (10) which is configured as an outwardly protruding retaining collar.

9. Sealing body according to claim 8, **characterised in that** between the retaining portions (14, 15), the retaining zone (9) is formed as a spring (16) which, in the installation state, presses the retaining portions (14, 15) towards each other and against the retaining region (10).

10. Sealing body according to any of claims 7 to 9, **characterised in that** the retaining zone (9) is formed in a rectilinear peripheral portion (18) of the sealing body (1).

11. Sealing body according to any of claims 1 to 10, **characterised in that** sealing body (1) has a circular or elliptical or elongated circular peripheral contour.

12. Sealing body according to any of claims 1 to 11, **characterised in that** sealing body (1) is produced by roll-forming from the at least one metal plate (11).

13. Sealing arrangement comprising a sealing body according to any of claims 1 to 12, **characterised in that** the outer component (2) is a burner of a combustion chamber of a gas turbine, wherein the sealing body (1), in the installation state, is arranged in the region of a passage opening (4) of the outer component, and the passage opening (4) is formed on a head of the burner, and the inner component (3) is a lance which protrudes from the combustion head into the burner and serves to deliver fuel to the burner and/or the combustion chamber.

## Revendications

1. Corps d'étanchéité pour l'étanchéification d'un composant externe (2) par rapport à un composant interne (3), plus particulièrement dans une chambre de combustion d'une turbine à gaz, le corps d'étanchéité (1) comprenant une zone d'étanchéité interne (7), avec laquelle, dans l'état de montage, il s'appuie contre une surface d'étanchéité externe (6) du composant interne (3) de manière fermée sur la circonférence et comprenant une zone d'étanchéité externe (8), avec laquelle, dans l'état de montage, il s'appuie contre une surface d'étanchéité interne (5) du composant externe (2) de manière fermée sur la circonférence, le corps d'étanchéité (1) comprenant deux tôles métalliques (11i, 11a) fermées sur la circonférence, en forme de bandes et se superposant et étant fabriqué par formage, moyennant quoi, sur un profilé (12) du corps d'étanchéité (1), la zone d'étanchéité interne (7) et la zone d'étanchéité externe (8) sont formées le long de toute la circonférence et les tôles métalliques (11i, 11a) étant disposées l'une dans l'autre et s'appuyant l'une contre l'autre de manière étanche, la zone d'étanchéité interne (7) étant formée sur la tôle interne (11i) et la zone d'étanchéité externe (8) étant formée sur la tôle externe (11a) ; **caractérisé en ce que** la tôle interne (11i) et la tôle externe (11 a) se distinguent l'une de l'autre en ce qui concerne leur matériau et/ou par leur épaisseur.

2. Corps d'étanchéité selon la revendication 1, **caractérisé en ce que** le corps d'étanchéité (1) comprend au moins une portion circonférentielle incurvée (17), dans laquelle la tôle interne (11i) et/ou la tôle externe (11a) comprennent plusieurs fentes (19) s'étendant transversalement par rapport à la direction circonférentielle et pénétrant dans la tôle (11i, 11a) correspondante.

3. Corps d'étanchéité selon la revendication 2, **caractérisé en ce que** les fentes (19) de la tôle interne (11i) sont disposées de manière décalée dans la direction circonférentielle par rapport aux fentes (19) de la tôle externe (11a), de façon à ce que les tôles (11i, 11a) s'appuient de manière étanche l'une contre l'autre entre des fentes (19) adjacentes dans la direction circonférentielle.

4. Corps d'étanchéité selon l'une des revendications 1 à 3, **caractérisé en ce que** le profilé (12) comprend une portion de ressort (13) flexible de manière élastique vers l'intérieur, qui, dans l'état de montage, comprime la zone d'étanchéité externe (8) contre la surface d'étanchéité interne (5).

5. Corps d'étanchéité selon l'une des revendications 1 à 4, **caractérisé en ce que** la zone d'étanchéité externe (8) dans le profilé (12) est incurvée de façon à ce qu'elle s'appuie, dans l'état de montage, de manière linéaire contre la surface d'étanchéité interne (5).

6. Corps d'étanchéité selon l'une des revendications 1 à 5, **caractérisé en ce que** la zone d'étanchéité interne (7) dans le profilé (12) s'étend en ligne droite et s'appuie, dans l'état de montage, sur toute sa surface, contre la surface d'étanchéité externe (6).

7. Corps d'étanchéité selon l'une des revendications 1 à 6, **caractérisé en ce que** le corps d'étanchéité (1) est fixé avec une zone de maintien (9) de manière auto-assurée à une partie de maintien (10) du composant interne (3), la zone de maintien (9) étant formée sur le profilé (12) au moins dans une portion circonférentielle (18).

8. Corps d'étanchéité selon la revendication 7, **caractérisé en ce que** la zone de maintien (9) est conçue dans le profilé (12) sous la forme d'une pince en forme de C, qui comprend deux portions de maintien (14, 15) opposée et pliées vers l'intérieur, qui entourent, dans l'état de montage, la partie de maintien (10) conçue comme un rebord de maintien dépassant vers l'extérieur.

9. Corps d'étanchéité selon la revendication 8, **caractérisé en ce que** la zone de maintien (9) est formée entre les portions de maintien (14, 15) comme un ressort (16) qui, dans l'état de montage, comprime les portions de maintien (14, 15) l'une contre l'autre et contre la partie de maintien (10).

10. Corps d'étanchéité selon l'une des revendications 7 à 9, **caractérisé en ce que** la zone de maintien (9) est formée dans une portion circonférentielle (18) en ligne droite du corps d'étanchéité (1).

11. Corps d'étanchéité selon l'une des revendications 1 à 10, **caractérisé en ce que** le corps d'étanchéité (1) présente un contour circonférentiel circulaire, elliptique ou ovale.

12. Corps d'étanchéité selon l'une des revendications 1 à 11, **caractérisé en ce que** le corps d'étanchéité (1) est réalisé par laminage à partir d'au moins une tôle métallique (11).

13. Dispositif d'étanchéité comprenant un corps d'étanchéité selon l'une des revendications 1 à 12, **caractérisé en ce que** le composant externe (2) est un brûleur d'une chambre de combustion d'une turbine à gaz, le corps d'étanchéité (1) étant disposé, dans l'état de montage, au niveau d'une ouverture de passage (4) du composant externe et l'ouverture de passage (4) étant réalisée au niveau d'une tête du brûleur, **en ce que** le composant interne (3) est une lance qui dépasse dans le brûleur à partir de la tête du brûleur et qui sert à injecter du carburant dans le brûleur et/ou dans la chambre de combustion.
